# EUROPÄISCHE PATENTSCHRIFT

(11) **EP 1 053 121 B1**
(45) Veröffentlichungstag und Bekanntmachung des Hinweises auf die Patenterteilung: **02.05.2003**
(21) Anmeldenummer: 99907486.7
(22) Anmeldetag: 03.02.1999
(51) Int. Cl.: B60N 2/06

(54) **ANSCHLAG ZUR BEGRENZUNG DES STELLWEGS EINER LÄNGSVERSTELLVORRICHTUNG FÜR SITZE, INSBESONDERE KRAFTFAHRZEUGSITZE**
STOP ELEMENT FOR LIMITING THE REGULATING DISTANCE OF A LONGITUDINAL ADJUSTMENT DEVICE FOR SEATS, ESPECIALLY MOTOR VEHICLE SEATS
BUTEE POUR LIMITER LA COURSE DE REGLAGE D'UN DISPOSITIF DE REGLAGE LONGITUDINAL POUR SIEGES, EN PARTICULIER POUR SIEGES DE VEHICULES AUTOMOBILES

(30) Priorität: 05.02.1998 DE 19804506
(43) Veröffentlichungstag der Anmeldung: 22.11.2000
(73) Patentinhaber: Keiper GmbH & Co., 67657 Kaiserslautern (DE)
(72) Erfinder: SCHÜLER, Rolf, D-42579 Heiligenhaus (DE); FLICK, Joachim, D-42499 Hückeswagen (DE)
(74) Vertreter: Mentzel, Norbert, Dipl.-Phys.
(86) Internationale Anmeldenummer: EP9900690
(87) Internationale Veröffentlichungsnummer: WO99039933

(56) Entgegenhaltungen:
- DE-A- 4 105 231
- DE-A- 19 647 448
- DE-A- 19 650 698
- FR-A- 2 746 721
- US-A- 3 279 737
- US-A- 5 242 143
- US-A- 5 275 369
- US-A- 5 482 243

## Beschreibung

Die Erfindung betrifft einen Anschlag zur Begrenzung des Stellweges einer Längsverstellvorrichtung für Sitze, insbesondere Kraftfahrzeugsitze, dessen Sitzteil an Laufschienen befestigt ist, wobei jede Laufschiene in einer am Fahrzeugbogen festgelegten Führungsschiene längsverschiebbar ist, und wenigstens eine Laufschiene mittels einer Sperreinrichtung in wählbaren Längslagen an der Führungsschiene feststellbar ist, wobei zwischen Laufschiene und Führungsschiene der Anschlag vorgesehen ist.

Aus der gattüngsbildenden DE 196 47 448 ist eine aus Führungsschienen und Laufschienen bestehende Schienenanordnung mit integrierter Längsverstellvorrichtung bekannt, bei welcher der Verschiebeweg zwischen Laufschiene und Führungsschiene in üblicher Weise begrenzt wird. Dabei werden als Begrenzung beispielsweise aus den Schienen ausgebogene Wandteile als Anschläge benutzt. Außerdem ist es üblich, an den Schienen Bolzen od.dgl. Bauteile vorzusehen, die als Anschläge dienen. Derartige Anschläge sind unelastisch, so daß bei plötzlichem Auftreffen der bewegbaren Laufschiene auf die Anschläge, insbesondere dann, wenn die Verschiebebewegung vehement und wuchtig erfolgt, relativ hohe Kräfte an den Anschlägen wirksam werden, die wiederum zu lauten Anschlaggeräuschen führen. Außerdem erfordert die Herstellung von Anschlägen in der oben genannten Weise zusätzliche Fertigungsvorgänge bei der Herstellung von Laufschienen und Führungsschienen.

Aufgabe der Erfindung ist es, einen Anschlag zwischen Führungsschiene und Laufschiene zu schaffen, der einerseits elastisch ist und andererseits keines vorbereitenden Fertigungsvorganges an den Schienen bedarf. Diese Aufgabe ist mit den im Kennzeichen des Patentanspruches 1 genannten Merkmalen gelöst. Ein derartiger Anschlag aus Prallkörper und Rastkörper kann aufgrund seiner zweiteiligen Gestaltung mit einem Sperrhaken an ohnehin vorhandenen, eine Zahnreihe für die Sperreinrichtung bildenden Durchbrüchen im Boden der Führungsschiene festgelegt werden, so daß ein besonderer, dem Anbringen des Anschlages dienender Fertigungsaufwand entfällt. Darüber hinaus läßt sich ein solcher Anschlag aus einem Kunststoff herstellen, wobei vorzugsweise ein elastischer, thermoplastischer Kunststoff für den Prallkörper Verwendung finden kann, während der Sperrhaken aus einem hochfesten und zähen Kunststoff gebildet sein mag.

Zur Fixierung des Anschlages an der Führungsschiene weist der Prallkörper vorteilhaft eine dem Durchgriff des Sperrhakens dienende, den Randbereich des Rastkopfes erfassende Ausnehmung auf, während der Sperrhaken in seinem unteren Bereich eine Gestalt zur Ergänzung des Rastkopfes im Bereich seiner Ausnehmung aufweist. Dabei mag der Prallkörper vorzugsweise eine etwa rechteckförmige Grundfläche mit einer in Längsachse weisenden Prallspitze aufweisen und unterseitig den in den Durchbruch in einem aufgewölbten Boden der Führungsschiene passenden Rastkopf aufweisen, der mit in Schienenlängsrichtung weisenden, den Boden der Führungsschiene hintergreifenden Rastvorsprüngen ausgestattet ist.

Zwecks sicherer Verklemmung des Prallkörpers an der Führungsschiene ist der Sperrhaken oberseitig mit einem sich in einer Einsenkung des Prallkörpers abstützenden Vorsprung versehen und weist unterseitig einen den Rastvorsprung des Rastkopfes ergänzenden Rastvorsprung auf. An diesem festgelegten Anschlag kann einerseits bei bestimmter Ausbildung die Laufschiene selbst oder mit ihrem Laufkäfig anschlagen, jedoch kann auch der die Sperreinrichtung aufnehmende Riegelträger an dem Anschlag zur Anlage kommen. Um den Anschlag beim Auftreffen der Laufschiene bzw. deren Bauteile für die Kraftaufnahme sicher abstützen zu können, weist der Prallkörper in seinem von der Prallspitze entfernten, rückwärtigen Bereich Stützfinger auf, die sich am Boden der Führungsschiene anlegen. Dabei mögen die seitlich abragenden Stützfinger an ihren freien Enden jeweils eine Aufwölbung aufweisen, die der Schaffung einer Anschlagfläche für die Kugelkäfige dienen mag.

Die Erfindung ist in einem Ausführungsbeispiel auf der Zeichnung dargestellt und wird nachfolgend näher erläutert. Es zeigen:
- Fig. 1: den Endbereich einer Führungsschiene in einem Längsschnitt mit daran festgelegtem Anschlag,
- Fig. 2: den Endbereich der Führungsschiene mit dem daran festgelegten Anschlag in einer Draufsicht,
- Fig. 3: die den Anschlag aufweisende Führungsschiene in einem Querschnitt nach der Linie III - III von Fig. 1,
- Fig. 4: den Anschlag in einer Seitenansicht,
- Fig. 5: den Anschlag in einer Frontansicht in Richtung des Pfeiles V von Fig. 4 gesehen,
- Fig. 6: den Anschlag in einer Draufsicht,
- Fig. 7: den Anschlag in einer perspektivischen, gegenüber den Fig. 1 - 6 verkleinerten Darstellung,

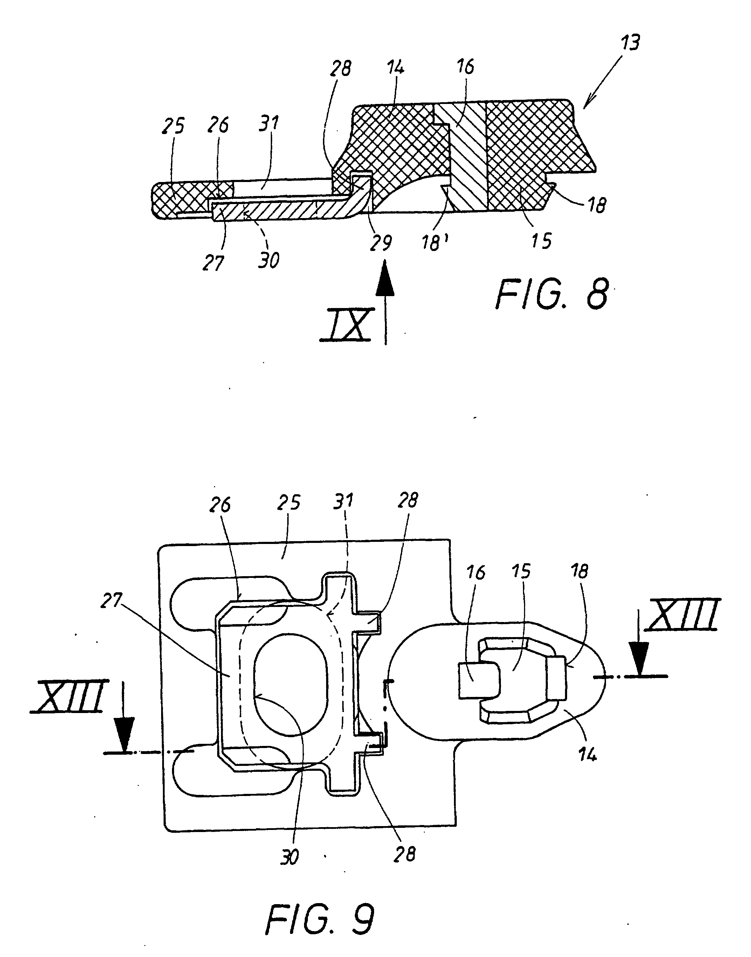

- Fig. 8: den Anschlag in einer weiteren Ausführungsform im Längsschnitt nach der Linie VIII - VIII von Fig. 9, mit einer eingesetzten Unterlegscheibe,
- Fig. 9: den aus Fig. 8 ersichtlichen Anschlag in einer Untersicht in Richtung des Pfeiles IX,

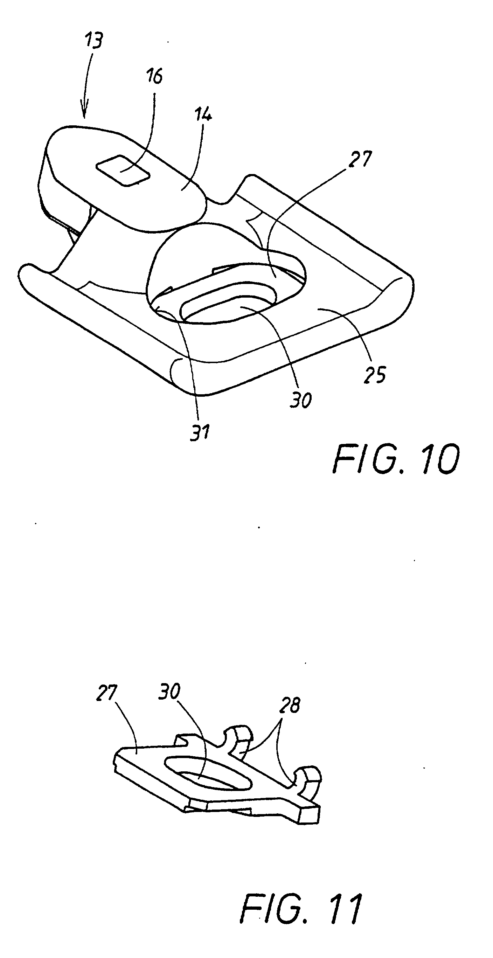

- Fig. 10: den Anschlag gemäß den Fig. 8 und 9 in perspektivischer Darstellung,
- Fig. 11: die in den Anschlag einsetzbare Unterlegscheibe in ebenfalls perspektivischer Darstellung.

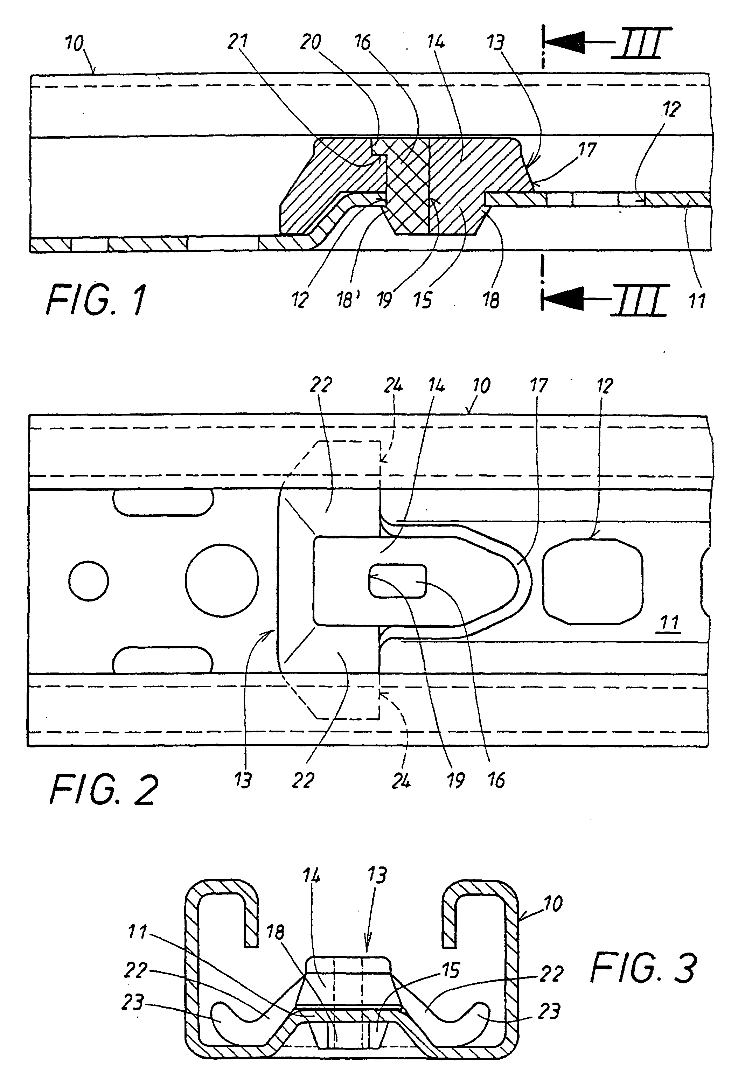

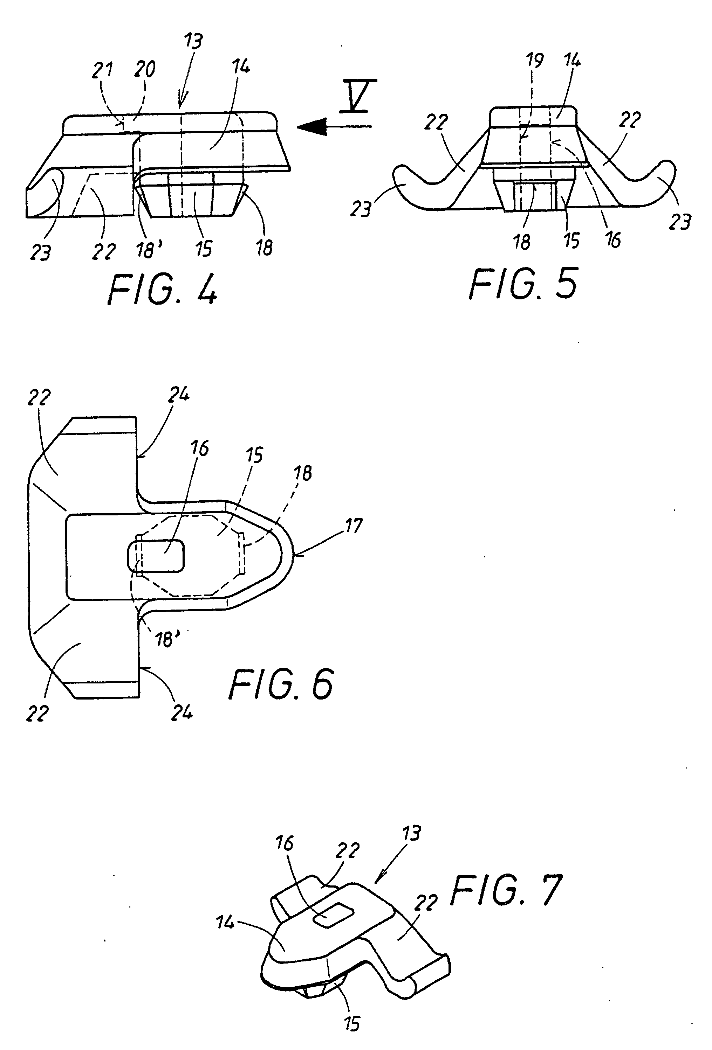

Die aus den Fig. 1 bis 3 ersichtliche Führungsschiene 10 weist, abgesehen von ihren Endbereichen, einen aufgewölbten Boden 11 auf, in dem eine Reihe von hintereinander angeordneten Durchbrüchen 12 eine Zahnreihe für eine Sperreinrichtung bildet, angeordnet sind. Die ebenen Bodenendbereiche der Führungsschiene 10 sind mit entsprechenden Ausnehmungen zur Befestigung der Führungsschiene 10 am Fahrzeugboden versehen, die jedoch für die Betrachtung des Anschlages 13 ohne Bedeutung sind.

Dieser Anschlag 13 besteht aus einem Prallkörper 14 und einem damit einstückig verbundenen Rastkopf 15, sowie einem in Prallkörper und Rastkopf eingesetzten Sperrhaken 16. Dabei mag Prallkörper 14 mit Rastkopf 15 aus einem elastischen, thermoplastischen Kunststoff gebildet sein, während der Sperrhaken 16 aus einem hochfesten und zähen Kunststoff bestehen kann. Der oberhalb des Bodens 11 der Führungsschiene 10 angeordnete und eine etwa rechteckförmige Grundfläche aufweisende Prallkörper 14 weist eine Prallspitze 17 auf. Diese Prallspitze 17 weist bei lagegerechter Montage des Anschlages 13 von dem jeweiligen Endbereich der Führungsschiene 10 weg zu deren innerer Längserstreckung. Der mit dem Prallkörper 14 einstückig verbundene Rastkopf 15 füllt den Durchbruch 12 im Boden 11 der Führungsschiene 10 vollständig aus und überragt diesen nach unten hin. Dabei sind an den aus dem Boden 11 ausragenden Teil des Rastkopfes 15 an dessen in Längsrichtung der Führungsschiene 10 weisenden Stirnseiten Rastvorsprünge 18 angeformt, welche den aufgewölbten Boden 11 der Führungsschiene 10 in Montagelage unterfassen.

Prallkörper 14 und Rastkopf 15 werden von einer senkrecht zur Längsrichtung der Führungsschiene 10 verlaufenden Ausnehmung 19 durchdrungen, wobei diese Ausnehmung 19 derart angeordnet ist, daß sie einen stirnseitigen Randbereich des Rastkopfes 15 erfaßt. Diese Ausnehmung 19 dient der Aufnahme des Sperrhakens 16, der unterseitig ebenfalls einen Rastvorsprung 18' aufweist, welcher in seiner Gestaltung dem Rastvorsprung 18 am Rastkopf 15 ähnlich ist. An seiner Oberseite weist der Sperrhaken 16 an der gleichen Seite, an der auch der Rastvorsprung 18' angeordnet ist, einen Vorsprung 20 auf, der in eine Einsenkung 21 in der Oberseite des Prallkörpers 14 bei Montagelage eingreift und an dieser Stirnseite des Rastkopfes 15 den Prallkörper 14 am Boden 11 der Führungsschiene 10 festlegt. An seinem der Prallspitze 17 gegenüberliegenden, rückwärtigen Bereich weist der Prallkörper 14 zwei seitlich abragende Stützfinger 22 auf, die sich am Boden der Führungsschiene 11 abstützen. Außerdem weisen die freien Enden der Stützfinger 22 Aufwölbungen 23 auf, die Anlageflächen 24 für die Laufschiene bzw. deren Kugellaufkäfig bilden, wenn sich die Laufschiene in ihrer Endlage befindet.

In Abweichung von der vorbeschriebenen Ausführungsform der Stützfinger 22 können diese auch Integrationsbestandteile einer Platte 25 sein, die sich an den rückwärtigen Bereich des Prallkörpers 14 anschließt. Diese Platte 25 weist unterseitig eine Aussparung 26 auf, die eine aus einem anderen Werkstoff-vorzugsweise Metall - bestehende Unterlegscheibe 27 derart aufnimmt, daß diese mit ihrer Unterseite geringfügig gegenüber der Unterseite der Platte 25 vorragt. Bei dieser Ausführungsform weist die Unterlegscheibe 27 zwei aufragende Rastfinger 28 auf, die in jeweils einer Ausnehmung 29 des Prallkörpers 14 verhaken und die Unterlegscheibe 27 an der Platte 25 festlegen. Die Unterlegscheibe 27 besitzt ein Zentralloch 30, das von einer Befestigungsschraube durchdrungen werden kann, um die Platte 25 des Anschlags 13 an der Führungsschiene 10 bzw. am Fahrzeugboden festlegen zu können. Über dem Zentralloch 30 der Unterlegscheibe 27 ist in der Platte 25 ein Durchbruch 31 zur Aufnahme eines Schraubenkopfes angeordnet.

### Bezugszeichenliste:

- 10 -: Führungsschiene
- 11 -: Boden
- 12 -: Durchbruch, in 11
- 13 -: Anschlag
- 14 -: Prallkörper, von 13
- 15 -: Rastkopf, von 13
- 16 -: Sperrhaken
- 17 -: Prallspitze, von 14
- 18 -: Rastvorsprung, von 15
- 18' -: Rastvorsprung, an 16
- 19 -: Ausnehmung
- 20 -: Vorsprung
- 21 -: Einsenkung, in 14
- 22 -: Stützfinger, an 14
- 23 -: Aufwölbung, von 22
- 24 -: Anlagefläche, an 22
- 25 -: Platte, an 14
- 26 -: Aussparung, in 25
- 27 -: Unterlegscheibe
- 28 -: Rastfinger
- 29 -: Ausnehmung
- 30 -: Zentralloch
- 31 -: Durchbruch

## Patentansprüche

1. Anschlag (13) zur Begrenzung des Stellweges einer Längsverstellvorrichtung für Sitze, insbesondere Kraftfahrzeugsitze, dessen Sitzteil an Laufschienen befestigt ist, wobei jede Laufschiene in einer am Fahrzeugboden festgelegten Führungsschiene (10) längsverschiebbar ist, und wenigstens eine Laufschiene mittels einer Sperreinrichtung in wählbaren Längslagen an der Führungsschiene feststellbar ist, wobei zwischen Laufschiene und Führungsschiene (10) der Anschlag (13) vorgesehen ist,
**dadurch gekennzeichnet,**
**daß** der Anschlag (13) von einem mit einem Rastkopf (15) einen Durchbruch (12) der Führungsschiene (10) durchgreifbaren Prallkörper (14) und einem diesen Prallkörper (14) durchgreifenden und an der Führungsschiene (10) verrastbaren Sperrhaken (16) gebildet ist.

2. Anschlag nach Anspruch 1, **dadurch gekennzeichnet, daß** der Prallkörper (14) mit seinem Rastkopf (15) aus einem elastischen Werkstoff und der Sperrhaken (16) aus einem hochfesten und zähen Kunststoff oder Metall gebildet ist.

3. Anschlag nach Anspruch 1 und/oder 2, **dadurch gekennzeichnet, daß** der Prallkörper (14) eine dem Durchgreifen des Sperrhakens (16) dienende, den Randbereich des Rastkopfes (15) erfassende Ausnehmung (19) aufweist, und der Sperrhaken (16) in seinem unteren Bereich eine Gestalt zur Ergänzung des Rastkopfes (15) im Bereich seiner Ausnehmung (19) aufweist.

4. Anschlag nach einem der vorhergehenden Ansprüche, **dadurch gekennzeichnet, daß** der Prallkörper (14) eine etwa rechteckförmige Grundfläche mit einer in Längsachse weisenden Prallspitze (17) aufweist und unterseitig den in den Durchbruch (12) in einem aufgewölbten Boden (11) der Führungsschiene passenden Rastkopf (15) aufweist, der mit in Schienenlängsrichtung weisenden, den Boden (11) der Führungsschiene hintergreifenden Rastvorsprüngen (18) ausgestattet ist.

5. Anschlag nach einem der vorhergehenden Ansprüche, **dadurch gekennzeichnet, daß** der Sperrhaken (16) oberseitig einen sich in einer Einsenkung (21) des Prallkörpers (14) abstützenden Vorsprung (20) aufweist und unterseitig mit einem den Rastvorsprung (18) des Rastkopfes (15) ergänzenden Rastvorsprung (18') versehen ist

6. Anschlag nach einem der vorhergehenden Ansprüche, **dadurch gekennzeichnet, daß** der Prallkörper (14) in seinem von der Prallspitze (17) entfernten, rückwärtigen Bereich Stützfinger (22) aufweist.

7. Anschlag nach Anspruch 6, **dadurch gekennzeichnet, daß** seitlich des Prallkörpers (14) Stützfinger (22) angeformt sind, deren Anlageflächen (24) Anschläge für die Kugelkäfige bilden.

8. Anschlag nach Anspruch 6, **dadurch gekennzeichnet, daß** als Stützfinger (22) eine Platte (25) ausgebildet ist, in die unterseitig eine Unterlegscheibe (27) eingesetzt ist.

9. Anschlag nach Anspruch 8, **dadurch gekennzeichnet, daß** die Unterlegscheibe (27) mit wenigstens einem Rastfinger (28) in einer Ausnehmung (29) im Prallkörper (14) verhakend festgelegt ist.

## Claims

1. Stop (13) for limiting the regulating distance of a longitudinal adjustment device for seats, especially motor vehicle seats, whose seat part is fastened on sliding rails, wherein each sliding rail is longitudinally slidable in a guide rail (10) secured on the vehicle floor, and at least one sliding rail can be secured on the guide rail (10) in selectable longitudinal positions by means of a locking device, wherein the stop (13) is provided between the sliding rail and the guide rail (10),
**characterised in that**
the stop (13) is formed by an impact member (14) capable of penetrating, with a latching head (15), an opening (12) in the guide rail (10), and by a locking hook (16) penetrating the said impact member (14) and capable of latchingly engaging the guide rail (10).

2. Stop according to claim 1, **characterised in that** the impact member (14) with its latching head (15) is formed from an elastic material and the locking hook (16) is formed from a high-strength and tenacious plastic or metal.

3. Stop according to claim 1 and/or 2, **characterised in that** the impact member (14) has a clearance (19) serving for the penetration of the locking hook (16) and including the edge region of the latching head (15), and the locking hook (16) has, in its lower region, a configuration for complementing the latching head (15) in the region of its clearance (19).

4. Stop according to one of the preceding claims, **characterised in that** the impact member (14) has n approximately rectangular base surface with an impact tip (17) oriented in the longitudinal axis and has, on its underside, the latching head (15) which fits into the opening (12) in an arched bottom (11) of the guide rail and is equipped with latching projections (18) pointing in the longitudinal direction of the rail and engaging behind the bottom (11) of the guide rail.

5. Stop according to one of the preceding claims, **characterised in that** the locking hook (16) has, on its upper side, a projection (20) supported in a depression (21) in the impact member (14) and is provided, on its underside, with a latching projection (18') which complements the latching projection (18) of the latching head (15).

6. Stop according to one of the preceding claims, **characterised in that** the impact member (14) has supporting fingers (22) in its rearward region remote from the impact tip (17).

7. Stop according to claim 6, **characterised in that** supporting fingers (22), whose contact surfaces (24) form stops for the ball cages, are formed on at the sides of the impact member (14).

8. Stop according to claim 6, **characterised in that** a plate (25), in whose underside a washer (27) is inserted, is constructed as the supporting fingers (22).

9. Stop according to claim 8, **characterised in that** the washer (27) is secured in an interlocking manner in a clearance (29) in the impact member (14) with the aid of at least one latching finger (28).

## Revendications

1. Butée (13) pour limiter la course de réglage d'un dispositif de réglage longitudinal pour des sièges, en particulier pour des sièges de véhicules automobiles, dont la partie d'assise est fixée sur des glissières coulissantes, chaque glissière coulissante étant déplaçable longitudinalement dans une glissière de guidage (10) fixée au plancher du véhicule, et au moins une glissière coulissante étant susceptible d'être fixée sur la glissière de guidage, en des positions longitudinales sélectionnables, à l'aide d'un dispositif de blocage, la butée (13) étant prévue entre la glissière coulissante et la glissière de guidage (10),
**caractérisée en ce que**
la butée (13) est formée par un corps d'impact (14), susceptible d'être traversé par une tête d'encliquetage (15), passant dans une ouverture (12) de la glissière de guidage (10), et par un crochet de blocage (16) traversant ce corps d'impact (14) et susceptible d'être encliqueté sur la glissière de guidage (10).

2. Butée selon la revendication 1, **caractérisée en ce que** le corps d'impact (14) est formé, avec sa tête d'encliquetage (15), d'un matériau élastique, et le crochet de blocage (16) est formé d'une matière synthétique à haute résistance et tenace, ou en métal.

3. Butée selon la revendication 1 et/ou 2, **caractérisée en ce que** le corps d'impact (14) présente un évidement (19), servant au passage d'un crochet de blocage (16) saisissant la zone de bordure de la tête d'encliquetage (15), et le crochet de blocage (16) présente, dans sa zone inférieure, une forme complémentaire de la tête d'encliquetage (15), dans la zone de son évidement (19).

4. Butée selon l'une des revendications précédentes,
**caractérisée en ce que** le corps d'impact (14) présente une surface de base à peu près rectangulaire, avec une pointe d'impact (17) tournée dans l'axe longitudinal, et présente en face inférieure la tête d'encliquetage (15) s'ajustant dans le passage (12), dans un fond (11) à bombage convexe de la glissière de guidage, tête d'encliquetage munie de saillies d'encliquetage (18), tournées dans la direction longitudinale de la glissière, saisissant par l'arrière le fond (11) de la glissière de guidage.

5. Butée selon l'une des revendications précédentes,
**caractérisée en ce que** le crochet de blocage (16) présente en face supérieure une saillie (20) prenant appui dans un creusement (21) du corps d'impact (14) et est muni en face inférieure d'une saillie d'encliquetage (18') complémentaire de la saillie d'encliquetage (18) de la tête d'encliquetage (15).

6. Butée selon l'une des revendications précédentes,
**caractérisée en ce que** le corps d'impact (14) présente des doigts d'appui (22) dans sa zone arrière, éloignée de la pointe d'impact (17).

7. Butée selon la revendication 6, **caractérisée en ce que** des doigts d'appui (22), dont les faces d'appui (24) forment des butées pour les cages à billes, sont formés sur le côté du corps d'impact (14).

8. Butée selon la revendication 6, **caractérisée en ce qu'**on réalise à titre de doigt d'appui (22) une plaque (25) dans laquelle, en face inférieure, est insérée une rondelle intercalaire (27).

9. Butée selon la revendication 8, **caractérisée en ce que** la rondelle intercalaire (27) est fixée, avec effet d'accrochage, à l'aide d'au moins un doigt d'encliquetage (28), dans un évidement (29) ménagé dans le corps d'impact (14).
